# EUROPEAN PATENT SPECIFICATION

(11) **EP 2 785 895 B1**
(45) Date of publication and mention of the grant of the patent: **18.04.2018**
(21) Application number: 12852844.5
(22) Date of filing: 28.11.2012
(51) Int. Cl.: C25C 7/04, C25B 9/20, C25B 13/02

(54) **FRAME AND ELECTROLYSIS SYSTEM**
RAHMEN UND ELEKTROLYSEANLAGE
CADRE ET SYSTÈME D'ÉLECTROLYSE

(30) Priority: 28.11.2011 FI 20116193
(43) Date of publication of application: 08.10.2014
(73) Proprietor: OUTOTEC (FINLAND) OY, 02230 Espoo (FI)
(72) Inventor: NORDLUND, Lauri, FI-00720 Helsinki (FI); VANHATALO, Harri, FI-05830 Hyvinkää (FI); NIEMINEN, Ville, FI-28300 Pori (FI); VIRTANEN, Henri K., FI-28610 Pori (FI); LUOMA, Rauno, FI-28220 Pori (FI); KAAKKOLAMMI, Noora, FI-29250 Nakkila (FI); AALTONEN, Heikki, FI-29250 Nakkila (FI); UNKURI, Jouni, FI-29250 Nakkila (FI)
(74) Representative: Papula Oy
(86) International application number: PCT/FI2012/051172
(87) International publication number: WO 2013/079788

(56) References cited:
- WO-A1-2010/089452
- US-A- 4 149 952
- US-A- 4 272 352
- US-A- 5 002 642
- ZA-A- 9 810 968

## Description

### FIELD OF THE INVENTION

The present invention relates to a frame to which a bag of diaphragm fabric used in an electrolysis process is attachable and to the inside of said bag an anode plate is adaptable. Further, the invention relates to an electrolysis system for electrowinning a metal from an electrolyte that contains a metallic salt, the system comprising electrolytic cells, each of said cells having means for keeping the electrolyte at a predetermined level and a number of anode plates and cathode plates immersed in the electrolyte in an alternating and consecutive manner, and wherein each anode plate is arranged inside a frame onto which a bag of diaphragm fabric is attached to form an anode bag assembly.

### BACKGROUND OF THE INVENTION

Electrowinning is a process where a metal dissolved in an electrolyte is reduced on a cathode by means of electric current. Electrowinning takes place in an electrolytic cell that contains a number of anodes and a number of cathodes arranged in and alternating manner.

When an electric current is conducted to the electrolysis system, metal is precipitated on the surface of the cathode and oxygen is generated on the anodes when the water decomposes, acid and oxygen are formed on the anodes, according to the reaction equations (1) and (2):

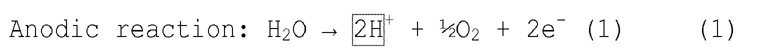

Cathodic reaction: Me^{z+} + ze⁻ → Me (2)

Me = metal, such as Ni, Co, Mn or Cu
wherein z = the charge of a metal ion

A diaphragm technique can be used in electrowinning metals, which in the electrochemical series are less noble than hydrogen. The overpotential of the reduction of these metals, which include nickel, cobalt and manganese, is higher than that of hydrogen, which is why the development of hydrogen at a low pH should be avoided by separating the anolyte and the catholyte from each other by a material that permeates the electrolyte in a controlled manner, such as a diaphragm fabric, and the electrolyte should flow from the catholyte compartment to the anolyte compartment. Each anode is arranged inside an anode bag that is made of a diaphragm material that permeates the electrolyte in a controlled manner. The anode bag defines the anodic compartment on the inside thereof and the cathodes lie in the free cathodic compartment that surrounds the anode bags. The anolyte is an electrolyte that surrounds the anode inside the bag and the catholyte is an electrolyte that surrounds the cathode.

The pH of the anolyte in the anode bag is lower (in the order of 1) than that of the catholyte in the cathodic space (in the order of 3-4), because the electrolyte continuously flows from the cathodic compartment to the anodic compartment inside the anode bag. The electrolyte is fed into the cathodic compartment and removed as an overflow. The anolyte and oxygen is continuously removed from each anode bag. The pH of the catholyte does not decrease, because the electrolyte flows in the manner as described. This is typical for a sulphate based electrolysis, but not for a chloride based electrolysis.

The flow of electrolyte is provided by means of a pressure difference between the anodic and cathodic compartments, including a hydrostatic pressure (caused by the difference of height between the anolyte and catholyte surfaces), and this prevents the back diffusion of hydrogen ions into the catholyte compartment.

In prior art, the publication ZA 9810968 (Filtaquip (Proprietary) Limited) discloses a frame assembly. The Filtaquip frame comprises a horizontal top beam having a first end and a second end, an upper side and a lower side, the anode plate being sealably attachable in a slot of the top beam at the longitudinal vertical middle plane of the top beam, a vertical first beam having a first upper end which is connected to the first end of the top beam, and a vertical second beam having a second upper end which is connected to the second end of the top beam. A horizontal bottom beam is connected to the lower ends of the vertical beams to form a rigid rectangular frame. The bag is sealed about the top beam by a caulking cord which is tied around the bag to locate the cord in the caulking groove of the top beam. The frame is provided with a suction tube, through which oxygen and the anolyte can be sucked out of the bag by underpressure. The publication ZA 9810968 also mentions that the bag can be made to be non-porous above the electrolyte level to further prevent of escape of gas therefrom.

Even though the Filtaquip anode bag technique has been used commercially for a short time in the Cawse Nickel Refinery in Australia, the sulphate based electrowinning process of nickel used therein is no longer in operation.

There are significant drawbacks with the above-described prior art system.

In tests it has been proved that the above-described anode bag assembly is not gas-tight and leakage of ambient air into the bag can occur. This causes that the underpressure in the parallelly connected anode bag frame assemblies becomes uneven. Therefore, in some of the bags the acid concentration of the anolyte is low while in some of the bags the acid concentration is so high that the anodes may start to dissolve. The anolyte which is sucked from the anode bags is used in the leaching process. As the sucked anolyte has a low acid concentration due to said lack of gas-tightness of the anode bag assemblies, more rich electrolyte, which has a high acid concentration, must be produced otherwise for the needs of the leaching process. This causes additional costs.

Further, due to the leakage of ambient air into the anode bags, pure oxygen, which also would be suitable to be used in the leaching process, cannot be obtained. Oxygen would be regarded to be sufficiently "pure" for this purpose if the amount of oxygen in the recovered gas would be more than 80%.

Therefore, an object of the present invention is to alleviate the problems described above and to introduce a frame and an electrolysis system that allow recovery of anolyte with high acid concentration and recovery of pure oxygen which can be used in an acid-oxygen pressure leaching process. If excess oxygen is produced, it could be sold for outside users.

Further, the object of the invention is to introduce a frame which is easy to assemble, repair and maintain. In the nickel electrowinning process the aim is to obtain a high acid concentration of the anolyte. Also the aim is to suppress acid mist and nickel emissions in the tankhouse environment because these emissions are detrimental to health and the operators have to use breathing masks in the tankhouse environment. However, with the above described prior art frame that is not gas-tight it is impossible to reach these aims. Therefore, the object of the invention is also to introduce a frame and an electrolysis system that allow reaching of high acid concentration of the anolyte and low acid mist concentration and nickel emissions in the tankhouse environment.

### SUMMARY OF THE INVENTION

A first aspect of the present invention is an anode bag assembly comprising a frame, a bag of diaphragm fabric used in an electrolysis process and an anodepalet (3) adapted to the inside of said bag. The frame comprises a horizontal top beam having a first end and a second end, an upper side and a lower side, the anode plate being sealingly attached in relation to the top beam at the longitudinal vertical middle plane of the top beam. The top beam comprises a slot located at the longitudinal vertical middle plane of the top beam, said slot being adapted to receive the anode plate through the slot. Further, the frame comprises a vertical first beam having a first upper end which is connected to the first end of the top beam, and a vertical second beam having a second upper end which is connected to the second end of the top beam. According to the invention the top beam comprises a cavity which opens downwardly and extends along the length of the lower side of the top beam. The top beam comprises downwardly extending skirt flanges which are integral with the top beam. The skirt flanges laterally limit the inner space of the cavity for
collecting, in operation, into the cavity pure oxygen generated on the anode plate during the electrolysis process.

A second aspect of the present invention is an electrolysis system for electrowinning a metal from an electrolyte that contains a metallic salt, said system comprising electrolytic cells, each of said cells having means for keeping the electrolyte at a predetermined level and a number of anode plates and cathode plates immersed in the electrolyte in an alternating and consecutive manner, and wherein each anode plate is arranged inside a frame onto which a bag of diaphragm fabric is attached to form an anode bag assembly. The frame comprises a horizontal top beam having a first end and a second end, an upper side and a lower side, the anode plate being sealingly attached in relation to the top beam at the longitudinal vertical middle plane of the top beam. The top beam comprises a slot located at the longitudinal vertical middle plane of the top beam, said slot being adapted to receive the anode plate through the slot. The frame further comprises a vertical first beam having a first upper end which is connected to the first end of the top beam, and a vertical second beam having a second upper end which is connected to the second end of the top beam. According to the invention the top beam comprises a cavity which opens downwardly and extends along the length of the lower side of the top beam and below the predetermined electrolyte surface level for collecting into the cavity pure oxygen generated on the anode plate during the electrolysis process and to prevent any leakage of ambient air into the cavity. The top beam comprises downwardly extending skirt flanges which are integral with the top beam. The top beam comprises downwardly extending skirt flanges which are integral with the top beam. The skirt flanges laterally limit the inner space of the cavity. The skirt flanges are dimensioned to extend a distance below a predetermined electrolyte level when the frame is placed in an electrolysis cell having said predetermined electrolyte level.

The advantage of the invention is that the downwardly opening cavity of the top beam extending below the electrolyte level acts as an "air lock" and prevents any ambient air from contaminating the pure oxygen. The pure oxygen collected to the cavity can be sucked away. With the anode frame according to invention it is possible to obtain 99% pure oxygen. Pure oxygen can then be used in an acid-oxygen pressure leaching process of sulphide ores. Since pure oxygen is valuable, this saves a lot of costs. Also the anolyte which is sucked away from the anode bags has a high acid concentration and can be used in the leaching process. The need to produce more acid for the leaching process otherwise in an acid plant is reduced. If oxygen is produced in excess, it can be sold for outside users and additional income can be obtained. The frame according to the invention is easy to assemble, repair and maintain. In the nickel electrowinning process the frame and electrolysis system of the invention allow obtaining pure oxygen, reaching of high acid concentration of the anolyte and low acid mist concentration and nickel emissions in the tankhouse environment.

In an embodiment of the anode bag assembly and the electrolysis system, the top beam comprises a pair of first skirt flanges each disposed at a lateral distance from the longitudinal vertical middle plane of the top beam.

In an embodiment of the anode bag assembly and the electrolysis system, the top beam comprises a pair of second skirt flanges each disposed adjacent to the longitudinal vertical middle plane of the top beam.

In an embodiment of the anode bag assembly and the electrolysis system, the second skirt flanges extend at a lower level than the first skirt flanges. This is because the anolyte level is kept lower than the catholyte level.

In an embodiment of the anode bag assembly and the electrolysis system, the top beam comprises a sealing placed around the edges of the slot.

In an embodiment of the anode bag assembly and the electrolysis system, the slot is adapted with a play to receive the anode plate detachably.

In an embodiment of the anode bag assembly and the electrolysis system, the top beam is permanently fixed to the anode plate at the slot.

In an embodiment of the anode bag assembly and the electrolysis system, the top beam comprises a suction pipe having a lower end which opens to the cavity at the first end of the top beam for removal of the oxygen and electrolyte from the cavity by suction.

In an embodiment of the anode bag assembly and the electrolysis system, the lower end of the suction pipe is beveled.

In an embodiment of the electrolysis system, the means for keeping the electrolyte surface level at the predetermined level comprise an overflow outlet for removal of the electrolyte from the cell by overflow.

In an embodiment of the electrolysis system, the anode bag assembly comprises:
- a hanging rod,
- the anode plate having the upper end of which fixed to the hanging rod,
- the top beam having the slot through which the anode plate is adapted to extend,
- the vertical first beam having the first upper end which is connected to the first end of the top beam, and a first lower end,
- the vertical second beam having a second upper end which is connected to the second end of the top beam, and a second lower end,
- the bag of diaphragm fabric arranged to surround and accommodate the frame and the anode plate, the vertical first and second beams (, ) and a part of the top beam,
- a bottom beam arranged on or inside the bag to abut against the first and second lower ends of the vertical first and second beams, and
- one or more of strapping bands strapped vertically around the hanging rod, the bag and the bottom beam to hold the anode assembly together.

In an embodiment of the electrolysis system, the anode bag assembly comprises one or more of spacers attached to the bottom beam for spacing the anode assembly from the adjacent cathode plates.

In an embodiment of the electrolysis system, the spacer is a U-shaped piece of electrically insulating material having a bottom part adapted to be placed against the lower side of the bottom beam, and U-branches which extend to a length above the bottom beam.

It is to be understood that the aspects and embodiments of the invention described above may be used in any combination with each other. Several of the aspects and embodiments may be combined together to form a further embodiment of the invention. A frame or an electrolysis system which is an aspect of the invention may comprise at least one of the embodiments of the invention described above.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Fig. 1 is an explosion view of an anode bag assembly including a frame according to one embodiment of the invention, an anode plate and a bag of diafragm fabric, a bottom beam and spacers,
Fig. 2 is a cross section II-II of the top beam from Fig. 1,
Fig. 3 is a cross section similar to Fig. 2 with an anode plate installed in the slot of the top beam,
Fig. 4 is an enlarged view of detail **A** from Fig. 1,
Fig. 5 shows schematically the cross section of the end parts of the electrolytic cell of one embodiment of the electrolysis system according to the invention;
Fig. 6 shows one embodiment of the anode bag assembly assembled from the parts shown in Fig 1 and bound together with strapping bands,
Fig. 7 is a cross section VII-VII from Fig. 6, and
Fig. 8 shows another embodiment of the anode bag assembly assembled from the parts shown in Fig 1 and bound together with strapping bands.

### DETAILED DESCRIPTION OF THE INVENTION

Reference will now be made in detail to the embodiments of the present invention, examples of which are illustrated in the accompanying drawings.

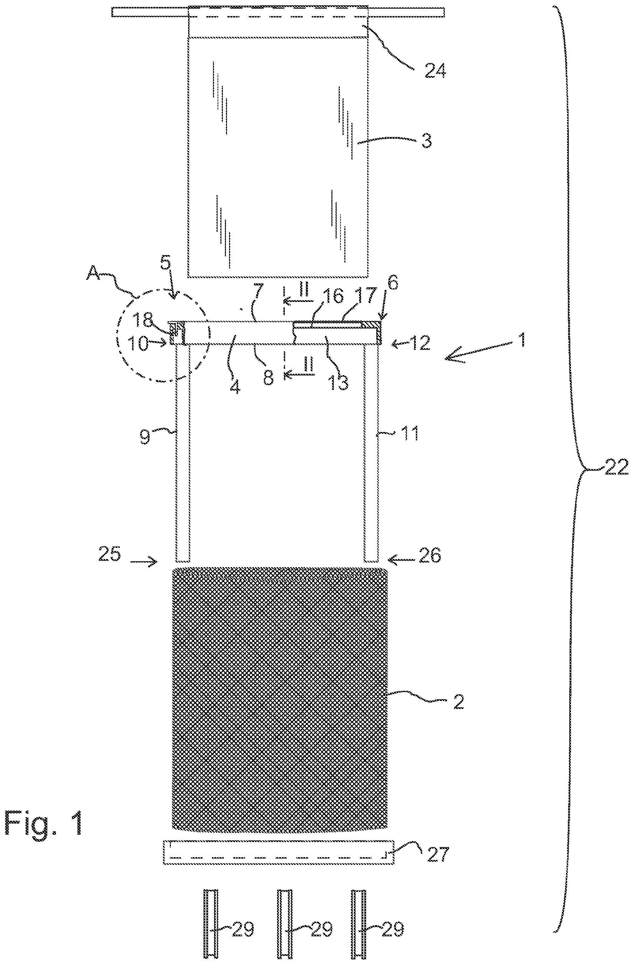

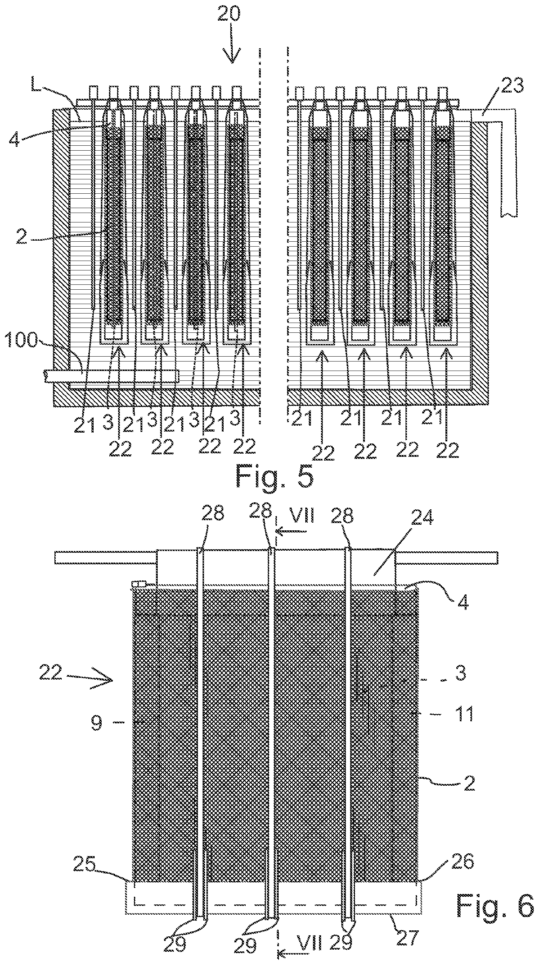

Figure 1 shows an exploded view of the anode bag assembly 22 usable in an electrolytic process for electrowinning a metal from an electrolyte that contains a metallic salt. In particular, the anode bag assembly 22 of the described embodiment is usable in sulphate based nickel electrowinning. The anode bag assembly 22 of Fig. 1 is shown in an assembled state in Figs. 5 to 7. The anode bag assembly 22 comprises a frame 1 to which an anode plate 3 is adaptable. A bag 2 of diaphragm fabric can be attached on the frame 1. The anode plate 3 thus remains inside the bag 2.

The frame 1 comprises a horizontal top beam 4 having a first end 5 and a second end 6, an upper side 7 and a lower side 8. The anode plate 3 is sealably attachable in relation to the top beam 4 by insertion through a slot 16 located at the longitudinal vertical middle plane of the top beam 4. The frame 1 further comprises a vertical first beam 9 having a first upper end 10 which is connected, eg. by a bolt joint (not shown), to the first end 5 of the top beam 4. The frame 1 further comprises a vertical second beam 11 having a second upper end 12 which is connected, eg. by a bolt joint (not shown), to the second end 6 of the top beam 4.

The top beam 4 comprises a cavity 13 which opens downwardly and extends along the length of the lower side 8 of the top beam 4. When the anode bag assembly 22 is installed in the electrolytic cell 20 as shown in Fig. 5, the cavity 13 can collect the oxygen generated on the anode plate 3 during the elecrolytic process. In use, leakage of air into the cavity 13 will be prevented, because the top beam 4 will be partially immersed in the electrolyte.

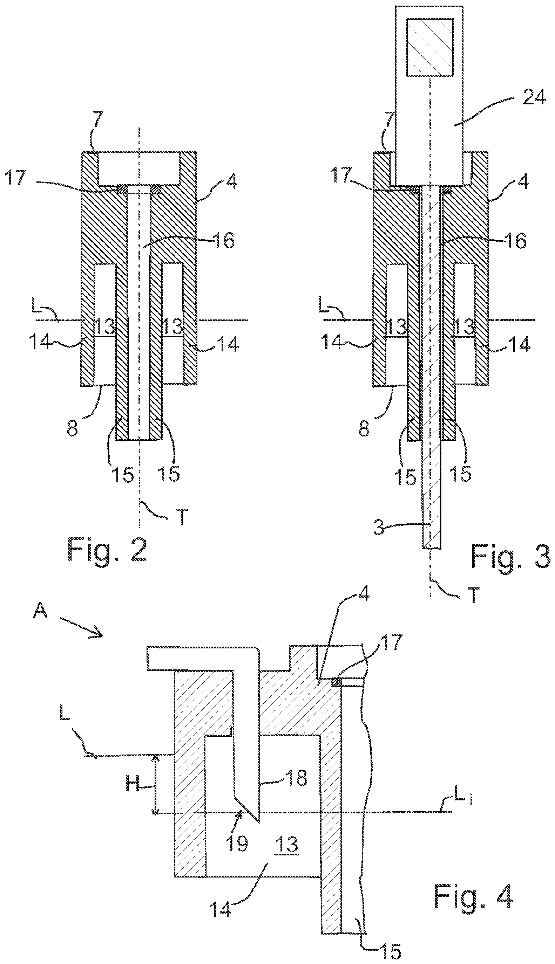

Reference is made to Figs. 2 and 3 showing the cross section of the top beam 4. The top beam 4 comprises downwardly extending skirt flanges 14, 15 which are integral, ie. uniform rigid material, with the top beam 4. The skirt flanges 14, 15 laterally limit the inner space of the cavity 13. The top beam 4 comprises a pair of first skirt flanges 14 each disposed at a lateral distance from the longitudinal vertical middle plane T of the top beam 4. The top beam 4 also comprises a pair of second skirt flanges 15 each disposed adjacent to the longitudinal vertical middle plane T of the top beam. The skirt flanges 14, 15 are dimensioned to extend a distance below a predetermined electrolyte level L when the frame 1 is placed in an electrolysis cell 20 having said predetermined electrolyte level L (see also Fig. 5). The second skirt flanges 15 extend at a lower level than the first skirt flanges 14. This is because the anolyte level Lᵢ inside the bag is kept a height H (see Fig. 4) which is lower than the catholyte level L in the cathodic compartment outside the bag.

Referring to Figs. 1 to 3, the top beam 4 comprises a slot 16 located at the longitudinal vertical middle plane T of the top beam. The slot 16 is adapted to receive the anode plate 3 through the slot with a small play to allow insertion. The top beam 4 comprises a ring-like sealing 17 placed around the edges of the slot 16. When the anode plate 3 is placed in the slot 16, a hanging rod 24 at the upper end of the anode plate will be pressed against the sealing 17 as shown in Fig. 3. The sealing 17 prevents leakage of air to the cavity 13 via the slot 16. In another embodiment (not-shown) the top beam 4 may be permanently fixed, eg. adhesively, to the anode plate at the slot 16,

With reference to Fig. 4, the top beam 4 comprises a suction pipe 18 having a lower end 19 which opens to the cavity 13 at the first end 5 of the top beam 4 for removal of the oxygen and electrolyte from the cavity 13 by suction. The lower end 19 of the suction pipe 18 is beveled at an angle which is preferably about 45°.

Fig. 5 is schematic cross-sectional illustration of the electrolytic cell 20. Rich electrolyte is fed to the cell via an inlet manifold 100 locating at the bottom of the cell 20. The level L of the electrolyte is maintained by an overflow outlet 23 for removal of the electrolyte from the cell 20 by overflow at the othe end of the cell.

A number of anode plates 3 and cathode plates 21 are immersed in the electrolyte in an alternating and consecutive manner. Each anode plate 3 is arranged inside a frame 1 onto which a bag 2 of diaphragm fabric is attached to form an anode bag assembly 22 which is shown in an exploded view in Fig. 1 and assembled together by strapping bands 28 in Fig. 6.

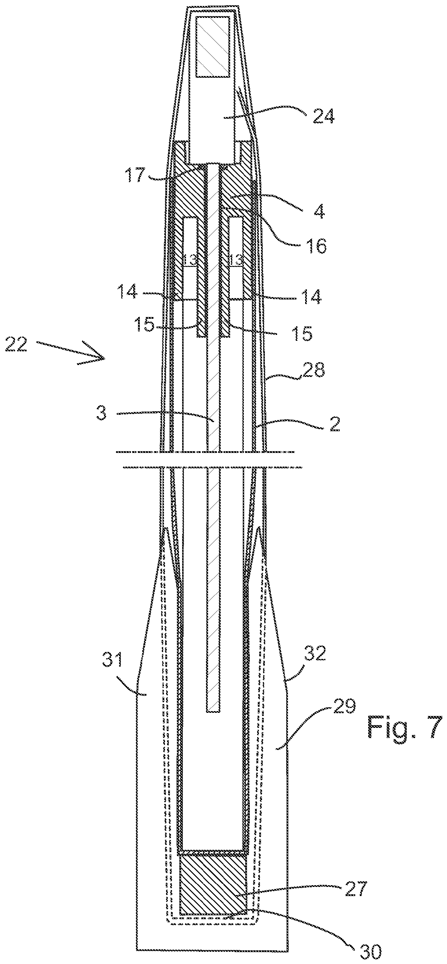

Referring to Figs. 6 and 7 the anode bag assembly 22 comprises a hanging rod 24. The anode plate 3 has the upper end fixed to the hanging rod 24. The anode plate 3 extends through the slot of the top beam 4. The structure of the frame 1 is described above with reference to Figs. 1 to 4. The vertical first beam 9 has the first upper end 10 connected to the first end 5 of the top beam 4, and a first lower end 25. The vertical second beam 11 has a second upper end 12 which is connected to the second end 6 of the top beam 4, and a second lower end 26. The bag 2 of diaphragm fabric is arranged to surround and accommodate the frame 1 and the anode plate 3, the vertical first and second beams 9, 10 and a part of the top beam 4. A bottom beam 27 is arranged on the bag 2 to abut against the first and second lower ends 25, 26 of the vertical first and second beams 9, 11. Three strapping bands 28 are strapped vertically around the hanging rod 24, the bag 2 and the bottom beam 27 to hold the anode assembly together.

As shown in Figs. 6 and 7 the anode bag assembly 22 comprises three spacers 29 attached to the bottom beam 27 for spacing the anode assembly 22 from the adjacent cathode plates 21. The spacers 29 also act as guides for the strapping bands 28.

Fig. 7 shows that spacer 29 is a U-shaped piece of electrically insulating material having a bottom part 30 adapted to be placed against the lower side of the bottom beam 27, and U-branches 31, 32 which extend to a length above the bottom beam 27.

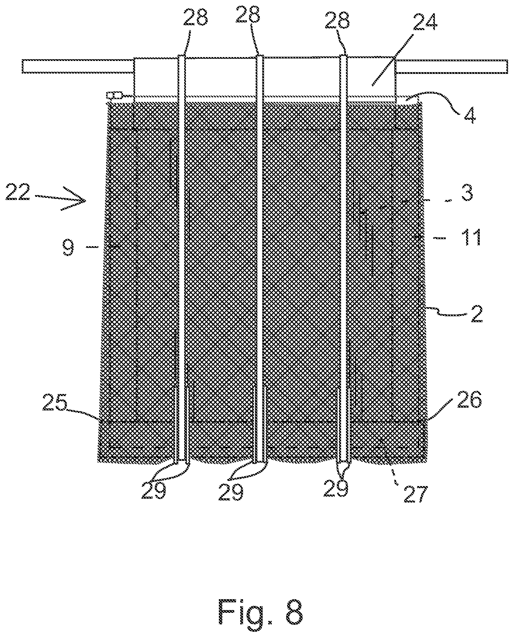

Fig. 8 shows another embodiment of the anode bag assembly 22. The anode plate 3 has the upper end fixed to the hanging rod 24. The anode plate 3 extends through the slot of the top beam 4. The structure of the frame 1 is described above with reference to Figs. 1 to 4. The vertical first beam 9 has the first upper end 10 connected to the first end 5 of the top beam 4, and a first lower end 25. The vertical second beam 11 has a second upper end 12 which is connected to the second end 6 of the top beam 4, and a second lower end 26. A bottom beam 27 is arranged to abut against the first and second lower ends 25, 26 of the vertical first and second beams 9, 11. The bag 2 of diaphragm fabric is arranged to surround and accommodate the frame 1 and the anode plate 3, the vertical first and second beams 9, 10, the bottom beam 27 and a part of the top beam 4. Thus, the difference of the embodiment of Fig. 8 in relation to the embodiment of Figs. 6 and 7 is that in Fig. 8 also the bottom beam 27 is inside the bag 2. Three spacers 29 are attached to the bottom beam 27 on the outer surface of the bag 2 for spacing the anode assembly 22 from the adjacent cathode plates 21. The spacers 29 also act as guides for the strapping bands 28. Three strapping bands 28 are strapped vertically around the hanging rod 24, the bag 2 and the bottom beam 27 to hold the anode assembly together.

### Example

In order to show the gas impermeability of the anode bag frame of the invention, the gas content inside the anode bag during the electrowinning operation of nickel was analyzed. At the current density of 200 Am-2 gas was suctioned from the bag and gas content analyzed. CO₂ was analyzed with FTIR Gasmet 5 gas analyzer, O₂ with gas analyzer O₂ Vaisala OMT355 and H₂ with Siemens CALOMAT 6. The gas contents were as follows: O₂ 98%, H₂ 1.3% and CO₂ 0.2%. Thus, the mathematically obtained content of N₂ was very low being less than 0.5%. The air content was almost negligible indicating that the bag is practically gas impermeable above the electrolyte level. In addition, oxygen content was very high and it could be recycled to be used elsewhere.

While the present inventions have been described in connection with a number of exemplary embodiments, and implementations, the present inventions are not so limited, but rather cover various modifications, and equivalent arrangements, as long as they fall within the scope of the appended claims.

## Claims

1. An anode bag assembly (22), comprising a frame (1), a bag (2) of diaphragm fabric used in an electrolysis process and an anode plate (3) adapted to the inside of said bag, the frame comprising
- a horizontal top beam (4) having a first end (5) and a second end (6), an upper side (7) and a lower side (8), the anode plate being sealingly attached in relation to the top beam at the longitudinal vertical middle plane of the top beam the top beam (4) comprising a slot (16) located at the longitudinal vertical middle plane (T) of the top beam, said slot being adapted to receive the anode plate (3) through the slot,
- a vertical first beam (9) having a first upper end (10) which is connected to the first end (5) of the top beam, and
- a vertical second beam (11) having a second upper end (12) which is connected to the second end (6) of the top beam, **characterised in that** the top beam (4) comprises a cavity (13) which opens downwardly and extends along the length of the lower side (8) of the top beam, the top beam (4) comprising downwardly extending skirt flanges (14, 15) which are integral with the top beam, and which skirt flanges laterally limit the inner space of the cavity (13) for collecting, in operation, into the cavity pure oxygen generated on the anode plate during the electrolysis process.

2. The anode bag assembly according to claim 1, **characterised in that** the top beam (4) comprises a pair of first skirt flanges (14) each disposed at a lateral distance from the longitudinal vertical middle plane (T) of the top beam.

3. The anode bag assembly according to claim 2, **characterised in that** the top beam (4) comprises a pair of second skirt flanges (15) each disposed adjacent to the longitudinal vertical middle plane (T) of the top beam.

4. The anode bag assembly according to claim 3, **characterised in that** the second skirt flanges (15) extend at a lower level than the first skirt flanges (14).

5. The anode bag assembly according to any one of the claims 1 to 4, **characterised in that** the top beam (4) comprises a sealing (17) placed around the edges of the slot (16).

6. The anode bag assembly according to any one of the claims 1 to 5, **characterised in that** the slot (16) is adapted with a play to receive the anode plate (3) detachably.

7. The anode bag assembly according to any one of the claims 1 to 5, **characterised in that** the top beam (4) is permanently fixed to the anode plate at the slot (16).

8. The anode bag assembly according to one or more of the claims 1 to 7, **characterised in that** the top beam (4) comprises a suction pipe (18) having a lower end (19) which opens to the cavity (13) at the first end (5) of the top beam (4) for removal of the oxygen and electrolyte from the cavity by suction.

9. The anode bag assembly according to claim 8, **characterised in that** the lower end (19) of the suction pipe (18) is beveled.

10. An electrolysis system for electrowinning a metal from an electrolyte that contains a metallic salt, said system comprising electrolytic cells (20), each of said cells having means for keeping the electrolyte at a predetermined level (L) and a number of anode plates (3) and cathode plates (21) immersed in the electrolyte in an alternating and consecutive manner, and wherein each anode plate (3) is arranged inside a frame (1) onto which a bag (2) of diaphragm fabric is attached to form an anode bag assembly (22), the frame (1) comprising
- a horizontal top beam (4) having a first end (5) and a second end (6), an upper side (7) and a lower side (8), the anode plate (3) being sealingly attached in relation to the top beam (4) at the longitudinal vertical middle plane (T) of the top beam (4), and the top beam (4) comprises a slot (16) located at the longitudinal vertical middle plane (T) of the top beam, said slot being adapted to receive the anode plate (3) through the slot,
- a vertical first beam (9) having a first upper end (10) which is connected to the first end (5) of the top beam (4), and
- a vertical second beam (11) having a second upper end (12) which is connected to the second end (6) of the top beam (4), **characterised in that** the top beam (4) comprises a cavity (13) which opens downwardly and extends along the length of the lower side (8) of the top beam (4) and below the predetermined electrolyte surface level (L), for collecting, in operation, into the cavity (13) pure oxygen generated on the anode plate during the electrolysis process and to prevent any leakage of ambient air into the cavity and that the top beam (4) comprises downwardly extending skirt flanges (14, 15) which are integral with the top beam, and which skirt flanges laterally limit the inner space of the cavity (13), the skirt flanges (14, 15) being dimensioned to extend a distance below a predetermined electrolyte level (L) when the frame (1) is placed in an electrolysis cell having said predetermined electrolyte level.

11. The electrolysis system according to claim 10, **characterised in that** the top beam (4) comprises a pair of first skirt flanges (14) each disposed at a lateral distance from the longitudinal vertical middle plane (T) of the top beam.

12. The electrolysis system according to claim 10 or 11, **characterised in that** the top beam (4) comprises a pair of second skirt flanges (15) each disposed adjacent to the longitudinal vertical middle plane (T) of the top beam.

13. The electrolysis system according to claim 12, **characterised in that** the second skirt flanges (15) extend at a lower level than the first skirt flanges (14).

14. The electrolysis system according to any one of the claims 10 to 13, **characterised in that** the top beam (4) comprises a sealing (17) placed around the edges of the slot (16).

15. The electrolysis system according to any one of the claims 10 to 14, **characterised in that** the slot (16) is adapted with a play to receive the anode plate (3) detachably.

16. The electrolysis system according to any one of the claims 10 to 14, **characterised in that** the top beam (4) is permanently fixed to the anode plate (3) at the slot (16).

17. The electrolysis system according to one or more of the claims 10 to 16, **characterised in that** the top beam (4) comprises a suction pipe (18) having a lower end (19) which opens to the cavity (13) at the first end (5) of the top beam (4) for removal of the oxygen and electrolyte from the cavity by suction.

18. The electrolysis system according to claim 17, **characterised in that** the lower end (19) of the suction pipe (18) is beveled.

19. The electrolysis system according to one or more of claims 10 to 18, **characterised in that** the means for keeping the electrolyte surface level at the predetermined level (L) comprise an overflow outlet (23) for removal of the electrolyte from the cell (20) by overflow.

20. The electrolysis system according to one or more of claims 10 to 21, **characterised in that** the anode bag assembly (21) comprises:
- a hanging rod (24),
- the anode plate (3) having the upper end of which fixed to the hanging rod (24),
- the top beam (4) having the slot (16) through which the anode plate is adapted to extend,
- the vertical first beam (9) having the first upper end (10) which is connected to the first end (5) of the top beam (4), and a first lower end (25),
- the vertical second beam (11) having a second upper end (12) which is connected to the second end (6) of the top beam (4), and a second lower end (26),
- the bag (2) of diaphragm fabric arranged to surround and accommodate the frame (1) and the anode plate (3), the vertical first and second beams (9, 10) and a part of the top beam (4),
- a bottom beam (27) arranged on or inside the bag (2) to abut against the first and second lower ends (25, 26) of the vertical first and second beams (9, 11), and
- one or more of strapping bands (28) strapped vertically around the hanging rod (2), the bag (2) and the bottom beam (27) to hold the anode assembly together.

21. The electrolysis system according claim 20, **characterised in that** the anode bag assembly (22) comprises one or more of spacers (29) attached to the bottom beam (27) for spacing the anode assembly (22) from the adjacent cathode plates (21).

22. The electrolysis system according claim 21, **characterised in that** the spacer (29) is a U-shaped piece of electrically insulating material having
- a bottom part (30) adapted to be placed against the lower side of the bottom beam (27), and
- U-branches (31, 32) which extend to a length above the bottom beam (27).

## Patentansprüche

1. Anodenbeutelanordnung (22), die einen Rahmen (1), einen Beutel (2) aus Diaphragma- bzw. Membrangewebe, das in einem Elektrolyseverfahren verwendet wird, und eine Anodenplatte (3), die an die Innenseite des Beutels angepasst ist, aufweist, wobei der Rahmen aufweist:
- einen horizontalen oberen Träger (4) mit einem ersten Ende (5) und einem zweiten Ende (6), einer Oberseite (7) und einer Unterseite (8), wobei die Anodenplatte bezüglich des oberen Trägers in der longitudinalen vertikalen mittleren Ebene des oberen Trägers dichtend angebracht ist, wobei der obere Träger (4) einen Schlitz (16), der in der longitudinalen vertikalen mittleren Ebene (T) des oberen Trägers angeordnet ist, aufweist, wobei der Schlitz eingerichtet ist, die Anodenplatte durch den Schlitz hindurch aufzunehmen,
- einen vertikalen ersten Träger (9) mit einem ersten oberen Ende (10), das mit dem ersten Ende (5) des oberen Trägers verbunden ist, und
- einen vertikalen zweiten Träger (11) mit einem zweiten oberen Ende (12), das mit dem zweiten Ende (6) des oberen Trägers verbunden ist,
**dadurch gekennzeichnet, dass** der obere Träger (4) einen Hohlraum (13), der nach unten geöffnet ist und sich entlang der Länge der Unterseite (8) des oberen Trägers erstreckt, aufweist, wobei der obere Träger (4) sich nach unten erstreckende Randflansche (14, 15) aufweist, die einstückig mit dem oberen Träger sind, und die Randflansche den inneren Raum des Hohlraumes (13) seitlich begrenzen, um während des Betriebs im Inneren des Hohlraums reinen Sauerstoff zu sammeln, der auf der Anodenplatte während des Elektrolyseverfahrens erzeugt wird.

2. Anodenbeutelanordnung gemäß Anspruch 1, **dadurch gekennzeichnet, dass** der obere Träger (4) ein Paar erster Randflansche (14) aufweist, die jeweils in einer lateralen Entfernung von der longitudinalen vertikalen mittleren Ebene (T) des oberen Trägers angeordnet sind.

3. Anodenbeutelvorrichtung gemäß Anspruch 2, **dadurch gekennzeichnet, dass** der obere Träger ein Paar zweiter Randflansche (15) aufweist, die jeweils benachbart zu der longitudinalen vertikalen mittleren Ebene (T) des oberen Trägers angeordnet sind.

4. Anodenbeutelanordnung gemäß Anspruch 3, **dadurch gekennzeichnet, dass** sich die zweiten Randflansche (15) auf einem niedrigeren Niveau als die ersten Randflansche (14) erstrecken.

5. Anodenbeutelanordnung gemäß einem der Ansprüche 1 bis 4, **dadurch gekennzeichnet, dass** der obere Träger (4) eine Dichtung (17) aufweist, die um die Kanten des Schlitzes (16) angeordnet ist.

6. Anodenbeutelanordnung gemäß einem der Ansprüche 1 bis 5, **dadurch gekennzeichnet, dass** der Schlitz (16) mit einem Spiel eingerichtet ist, um die Anodenplatte (3) abnehmbar aufzunehmen.

7. Anodenbeutelanordnung gemäß einem der Ansprüche 1 bis 5, **dadurch gekennzeichnet, dass** der obere Träger (4) dauerhaft mit der Anodenplatte an dem Schlitz (16) befestigt ist.

8. Anodenbeutelanordnung gemäß einem oder mehreren der Ansprüche 1 bis 7, **dadurch gekennzeichnet, dass** der obere Träger (4) ein Ansaugrohr (18) mit einem niedrigeren bzw. unteren Ende (19) aufweist, das sich zum Hohlraum (13) hin an dem ersten Ende des oberen Trägers (4) öffnet, um Sauerstoff und den Elektrolyten aus dem Hohlraum durch Absaugen zu entfernen.

9. Anodenbeutelanordnung gemäß Anspruch 8, **dadurch gekennzeichnet, dass** das niedrigere Ende (19) des Ansaugrohrs (18) abgeschrägt ist.

10. Elektrolysesystem zur Elektrogewinnung eines Metalls aus einem Elektrolyten, der ein metallisches Salz beinhaltet, wobei die Vorrichtung Elektrolytzellen (20) aufweist, wobei jede der Zellen Mittel zum Aufbewahren des Elektrolyten auf einem vorbestimmten Niveau (L) und eine Anzahl von Anodenplatten (3) und Kathodenplatten (21), die in den Elektrolyten in einer alternierenden aufeinanderfolgenden Weise eingetaucht sind, aufweist, und wobei jede Anodenplatte (3) in einem Rahmen (1) angeordnet ist, auf den ein Beutel (2) aus Membrangewebe zum Formen einer Anodenbeutelvorrichtung (22) befestigt wird, wobei der Rahmen (1) aufweist:
- einen horizontalen Träger (4) mit einem ersten Ende (5) und einem zweiten Ende (6), einer Oberseite (7) und einer Unterseite (8), wobei die Anodenplatte (3) bezüglich des oberen Trägers (4) in der longitudinalen vertikalen mittleren Ebene (T) des oberen Trägers (4) dichtend angebracht ist, wobei der obere Träger (4) einen Schlitz (16), der in der longitudinalen vertikalen mittleren Ebene (T) des oberen Trägers angeordnet ist, aufweist, wobei der Schlitz eingerichtet ist, die Anodenplatte (3) durch den Schlitz hindurch aufzunehmen,
- einen vertikalen ersten Träger (9) mit einem ersten oberen Ende (10), das mit dem ersten Ende (5) des oberen Trägers (4) verbunden ist, und
- einen vertikalen zweiten Träger (11) mit einem zweiten oberen Ende (12), das mit dem zweiten Ende (6) des oberen Trägers (4) verbunden ist,
**dadurch gekennzeichnet, dass** der obere Träger (4) einen Hohlraum (13), der sich nach unten hin öffnet und sich entlang der Länge der Unterseite (8) des oberen Trägers (4) und unterhalb des vorbestimmten Elektrolytoberflächenniveaus (L) erstreckt, aufweist, der dazu vorgesehen ist, während des Betriebs im Inneren des Hohlraums reinen Sauerstoff zu sammeln, der auf der Anodenplatte während des Elektrolyseverfahrens erzeugt wird, und ein Eindringen von Umgebungsluft in den Hohlraum zu vermeiden, und dass der obere Träger (4) nach unten erstreckende Randflansche (14, 15) aufweist, die einstückig mit dem oberen Träger sind, und die Randflansche den Innenraum des Hohlraumes (13) seitlich begrenzen, wobei die Randflansche (14, 15) so dimensioniert sind, dass sie sich in eine Strecke unter ein vorbestimmtes Elektrolytniveau (L) erstrecken, wenn der Rahmen (1) in einer Elektrolysezelle angeordnet wird, die das vorbestimmte Elektrolytniveau aufweist.

11. Elektrolysesystem gemäß Anspruch 10, **dadurch gekennzeichnet, dass** der obere Träger (4) ein Paar erster Randflansche (14) aufweist, die jeweils in einer lateralen Entfernung von der longitudinalen vertikalen mittleren Ebene (T) des oberen Trägers angeordnet sind.

12. Elektrolysesystem gemäß Anspruch 10 oder 11, **dadurch gekennzeichnet, dass** der obere Träger ein Paar zweiter Randflansche (15) aufweist, die jeweils benachbart zu der longitudinalen vertikalen mittleren Ebene (T) des oberen Trägers angeordnet sind.

13. Elektrolysesystem gemäß Anspruch 12, **dadurch gekennzeichnet, dass** sich die zweiten Randflansche (15) in bzw. auf einem niedrigeren Niveau als die ersten Randflansche (14) erstrecken.

14. Elektrolysesystem gemäß einem der Ansprüche 10 bis 13, **dadurch gekennzeichnet, dass** der obere Träger (4) eine Dichtung (17) aufweist, die um die Kanten bzw. Ränder des Schlitzes (16) angeordnet ist.

15. Elektrolysevorrichtung gemäß einem der Ansprüche 10 bis 14, **dadurch gekennzeichnet, dass** der Schlitz (16) mit einem Spiel ausgebildet ist, um die Anodenplatte (3) abnehmbar aufzunehmen.

16. Elektrolysesystem gemäß einem der Ansprüche 10 bis 14, **dadurch gekennzeichnet, dass** der obere Träger (4) dauerhaft an der Anodenplatte an dem Schlitz (16) befestigt ist.

17. Elektrolysesystem gemäß einem oder mehreren der Ansprüche 10 bis 16, **dadurch gekennzeichnet, dass** der obere Träger (4) ein Ansaugrohr (18) mit einem niedrigeren bzw. unteren Ende (19) aufweist, das sich zum Hohlraum (13) hin an dem ersten Ende (5) des oberen Trägers (4) öffnet, um den Sauerstoff und den Elektrolyten aus dem Hohlraum durch Absaugen zu entfernen.

18. Elektrolysesystem gemäß Anspruch 17, **dadurch gekennzeichnet, dass** das niedrigere Ende (19) des Ansaugrohrs (18) abgeschrägt ist.

19. Elektrolysesystem gemäß einem oder mehreren der Ansprüche 10 bis 18, **dadurch gekennzeichnet, dass** die Mittel zum Halten des Elektrolytoberflächenniveaus auf einem vorbestimmten Niveau (L) einen Überlaufauslass (23) zum Entfernen des Elektrolyten aus der Zelle (20) durch Überlauf aufweisen.

20. Elektrolysesystem gemäß einem oder mehreren der Ansprüche 10 bis 21, **dadurch gekennzeichnet, dass** die Anodenbeutelanordnung (21) aufweist:
- ein Aufhängestab (24),
- die Anodenplatte (3), deren oberes Ende an dem Aufhängestab (24) befestigt ist,
- den oberen Träger (4) mit dem Schlitz (16), durch den die Anodenplatte eingerichtet ist, sich zu erstrecken,
- den vertikalen ersten Träger (9) mit dem ersten oberen Ende (10), das mit dem ersten Ende (5) des oberen Trägers (4) verbunden ist, und einem ersten unteren Ende (25),
- den vertikalen zweiten Träger (11) mit einem zweiten oberen Ende (12), das mit dem zweiten Ende (6) des oberen Trägers (4) verbunden ist, und einem zweiten unteren Ende (26),
- den Beutel (2) aus Membrangewebe, der dazu eingerichtet ist, den Rahmen (1), die Anodenplatte (3), die vertikalen ersten und zweiten Träger (9, 10) und einen Teil des oberen Trägers (4) zu umgeben und aufzunehmen,
- einen unteren Träger (27), der auf oder in dem Beutel so angeordnet ist, dass er an den ersten und zweiten unteren Enden (25, 26) der vertikalen ersten und zweiten Träger (9, 11) anliegt, und
- ein oder mehrere Anbringungsbänder (28), die vertikal um den Aufhängestab (24), den Beutel (2) und den unteren Träger (27) angebracht bzw. geschnallt sind, um die Anodenvorrichtung zusammenzuhalten.

21. Elektrolysesystem gemäß Anspruch 20, **dadurch gekennzeichnet, dass** die Anodenbeutelanordnung (22) einen oder mehrere Abstandshalter (29), die an dem unteren Träger (27) angebracht sind, aufweist, um die Anodenbeutelanordnung (22) von den benachbarten Kathodenplatten (21) auf Abstand zu halten.

22. Elektrolysesystem gemäß Anspruch 21, **dadurch gekennzeichnet, dass** der Abstandshalter (29) ein U-förmiges Bauteil aus elektrisch isolierendem Material ist und aufweist
- einen unteren Teil (30), der eingerichtet ist, gegen die Unterseite des unteren Trägers (27) platziert bzw. angeordnet zu werden, und
- U-Schenkel (31, 32), die sich in einer Länge über den unteren Träger (27) hinaus erstrecken.

## Revendications

1. Ensemble de sac d'anode (22) comprenant un cadre (1), une enveloppe (2) de tissu de membrane utilisé dans un processus d'électrolyse et une plaque d'anode (3) adaptée à l'intérieur dudit sac, le cadre comprenant
- une barre supérieure horizontale (4) ayant une première extrémité (5) et une deuxième extrémité (6), un côté supérieur (7) et un côté inférieur (8), la plaque d'anode étant fixée de façon étanche par rapport à la barre supérieure au niveau du plan vertical médian longitudinal de la barre supérieure, la barre supérieure (4) comprenant une fente (16) située au niveau du plan vertical médian longitudinal (T) de la barre supérieure, ladite fente étant adaptée pour recevoir la plaque d'anode (3) au travers de la fente,
- une première barre verticale (9) ayant une première extrémité supérieure (10) qui est raccordée à la première extrémité (5) de la barre supérieure, et
- une deuxième barre verticale (11) ayant une deuxième extrémité supérieure (12) qui est raccordée à la deuxième extrémité (6) de la barre supérieure, **caractérisé en ce que** la barre supérieure (4) comprend une cavité (13) qui s'ouvre vers le bas et s'étend le long de la longueur du côté inférieur (8) de la barre supérieure, la barre supérieure (4) comprenant des brides de jupe (14, 15) s'étendant vers le bas qui sont d'un seul tenant avec la barre supérieure, et lesdites brides de jupes limitent latéralement l'espace intérieur de la cavité (13) pour collecter, en fonctionnement dans la cavité, de l'oxygène pur généré sur la plaque d'anode pendant le processus d'électrolyse.

2. Ensemble de sac d'anode selon la revendication 1, **caractérisé en ce que** la barre supérieure (4) comprend une paire de premières brides de jupe (14), chacune étant disposée à une distance latérale du plan vertical médian longitudinal (T) de la barre supérieure.

3. Ensemble de sac d'anode selon la revendication 2, **caractérisé en ce que** la barre supérieure (4) comprend une paire de deuxièmes brides de jupe (15), chacune étant disposée sur le plan adjacent au plan vertical médian longitudinal (T) de la barre supérieure.

4. Ensemble de sac d'anode selon la revendication 3, **caractérisé en ce que** les deuxièmes brides de jupe (15) s'étendent à un niveau plus bas que les premières brides de jupe (14).

5. Ensemble de sac d'anode selon l'une quelconque des revendications 1 à 4, **caractérisé en ce que** la barre supérieure (4) comprend un joint (17) placé autour des bords de la fente (16).

6. Ensemble de sac d'anode selon l'une quelconque des revendications 1 à 5, **caractérisé en ce que** la fente (16) est adaptée avec un jeu pour recevoir la plaque d'anode (3) de façon amovible.

7. Ensemble de sac d'anode selon l'une quelconque des revendications 1 à 5, **caractérisé en ce que** la barre supérieure (4) est fixée de façon permanente à la plaque d'anode au niveau de la fente (16).

8. Ensemble de sac d'anode selon l'une ou plusieurs des revendications 1 à 7, **caractérisé en ce que** le faisceau supérieur (4) comprend un tuyau d'aspiration (18) ayant une extrémité inférieure (19) qui s'ouvre sur la cavité (13) au niveau de la première extrémité (5) de la barre supérieure (4) pour le retrait de l'oxygène et des électrolytes de la cavité par aspiration.

9. Ensemble de sac d'anode selon la revendication 8, **caractérisé en ce que** l'extrémité inférieure (19) du tuyau d'aspiration (18) est biseautée.

10. Système d'électrolyse pour extraction électrolytique d'un métal d'un électrolyte qui contient un sel métallique, ledit système comprenant des cellules électrolytiques (20), chacune desdites cellules ayant des moyens de conservation de l'électrolyte à un niveau prédéterminé (L) et un nombre de plaques d'anode (3) et de plaques de cathode (21) immergées dans l'électrolyte de manière alternative et consécutive,
et dans lequel chaque plaque d'anode (3) est agencée à l'intérieure d'un cadre (1) sur lequel un sac (2) de tissu de membrane est fixé pour former un ensemble de sac d'anode (22), le cadre (1) comprenant
- une barre supérieure horizontale (4) ayant une première extrémité (5) et une deuxième extrémité (6), un côté supérieur (7) et un côté inférieur (8), la plaque d'anode (3) étant fixée de façon étanche par rapport à la barre supérieure (4) au niveau du plan vertical médian longitudinal (T) de la barre supérieure (4) et la barre supérieure (4) comprend une fente (16) située au niveau du plan vertical médian longitudinal (T) de la barre supérieure, ladite fente étant adaptée pour recevoir la plaque d'anode (3) au travers de la fente,
- une première barre verticale (9) ayant une première extrémité supérieure (10) qui est raccordée à la première extrémité (5) de la barre supérieure (4), et
- une deuxième barre verticale (11) ayant une deuxième extrémité supérieure (12) qui est raccordée à la deuxième extrémité (6) de la barre supérieure (4), **caractérisé en ce que** la barre supérieure (4) comprend une cavité (13) qui s'ouvre vers le bas et s'étend le long de la longueur du côté inférieur (8) de la barre supérieure (4) et en dessous du niveau de la surface d'électrolyte prédéterminée (L) pour collecter, en fonctionnement dans la cavité (13), de l'oxygène pur généré sur la plaque d'anode pendant le processus d'électrolyse et pour empêcher toute fuite d'air ambiant dans la cavité, et **en ce que** la barre supérieure (4) comprend des brides de jupe (14, 15) s'étendant vers le bas qui sont d'un seul tenant avec la barre supérieure, et lesdites brides de jupes limitent latéralement l'espace intérieur de la cavité (13), les brides de jupe (14, 15) étant dimensionnées pour s'étendre sur une distance en dessous d'un niveau d'électrolyte prédéterminé (L) lorsque le cadre (1) est placé dans une cellule d'électrolyse ayant ledit niveau d'électrolyte prédéterminé.

11. Système d'électrolyse selon la revendication 10, **caractérisé en ce que** la barre supérieure (4) comprend une paire de premières brides de jupe (14), chacune étant disposée sur une distance latérale du plan vertical médian longitudinal (T) de la barre supérieure.

12. Système d'électrolyse selon la revendication 10 ou 11, **caractérisé en ce que** la barre supérieure (4) comprend une paire de deuxièmes brides de jupe (15), chacune étant disposée sur le plan adjacent au plan vertical médian longitudinal (T) de la barre supérieure.

13. Système d'électrolyse selon la revendication 12, **caractérisé en ce que** les deuxièmes brides de jupe (15) s'étendent à un niveau plus bas que celui des premières brides de jupe (14).

14. Système d'électrolyse selon l'une quelconque des revendications 10 à 13, **caractérisé en ce que** la barre supérieure (4) comprend un joint (17) placé autour des bords de la fente (16).

15. Système d'électrolyse selon l'une quelconque des revendications 10 à 14, **caractérisé en ce que** la fente (16) est adaptée avec un jeu pour recevoir la plaque d'anode (3) de façon amovible.

16. Système d'électrolyse selon l'une quelconque des revendications 10 à 14, **caractérisé en ce que** la barre supérieure (4) est fixée de façon permanente à la plaque d'anode (3) au niveau de la fente (16).

17. Système d'électrolyse selon l'une ou plusieurs des revendications 10 à 16, **caractérisé en ce que** le faisceau supérieur (4) comprend un tuyau d'aspiration (18) ayant une extrémité inférieure (19) qui s'ouvre sur la cavité (13) au niveau de la première extrémité (5) de la barre supérieure (4) pour le retrait de l'oxygène et des électrolytes de la cavité par aspiration.

18. Système d'électrolyse selon la revendication 17, **caractérisé en ce que** l'extrémité inférieure (19) du tuyau d'aspiration (18) est biseautée.

19. Système d'électrolyse selon une ou plusieurs des revendications 10 à 18, **caractérisé en ce que** les moyens de conservation du niveau de surface de l'électrolyte au niveau prédéterminé (L) comprennent une sortie de débordement (23) pour le retrait de l'électrolyte de la cellule (20) par débordement.

20. Système d'électrolyse selon une ou plusieurs des revendications 10 à 21, **caractérisé en ce que** l'ensemble de sac d'anode (21) comprend :
- une tige de suspension (24),
- la plaque d'anode (3) ayant son extrémité supérieure fixée à la tige de suspension (24),
- la barre supérieure (4) ayant la fente (16) au travers de laquelle la plaque d'anode est adaptée à s'étendre,
- la première barre verticale (9) ayant la première extrémité supérieure (10) qui est raccordée à la première extrémité (5) de la barre supérieure (4), et une première extrémité inférieure (25),
- la deuxième barre verticale (11) ayant une deuxième extrémité supérieure (12) qui est raccordée à la deuxième extrémité (6) de la barre supérieure (4), et une deuxième extrémité inférieure (26),
- le sac (2) de tissu de membrane étant agencé pour entourer et recevoir le cadre (1) et la plaque d'anode (3), les première et deuxième barres verticales (9, 10) et une partie de la barre supérieure (4),
- une barre inférieure (27) agencée sur ou à l'intérieur du sac (2) pour appuyer contre les première et deuxième extrémités inférieures (25, 26) sur les première et deuxième barres verticales (9, 11), et
- une ou plusieurs bandes de cerclage (28) attachées verticalement autour de la tige de suspension (2), du sac (2) et de la barre inférieure (27) pour maintenir ensemble l'ensemble d'anode.

21. Système d'électrolyse selon la revendication 20, **caractérisé en ce que** l'ensemble de sac d'anode (22) comprend un ou plusieurs espaceurs (29) fixés à la barre inférieure (27) pour espacer l'ensemble d'anode (22) des plaques de cathode adjacentes (21).

22. Système d'électrolyse selon la revendication 21, **caractérisé en ce que** l'espaceur (29) est un élément en forme de U d'un matériau électriquement isolant ayant
- une partie inférieure (30) adaptée pour être placée contre le côté inférieur de la barre inférieure (27) et
- des branches en U (31, 32) qui s'étendent sur une longueur au-dessus de la barre inférieure (27).
